# EUROPEAN PATENT APPLICATION

(11) **EP 1 420 532 A1**
(43) Date of publication of application: **19.05.2004**
(21) Application number: 02360316.0
(22) Date of filing: 15.11.2002
(51) Int. Cl.: H04J 7/00, H04L 5/04

(54) **System for multiplexing and transmission of asynchronous data signals**

(71) Applicant: ALCATEL, 75008 Paris (FR)
(72) Inventor: Wedding, Bertold, 70825 Korntal-Münchingen (DE)
(74) Representative: KOHLER SCHMID + PARTNER

(57) **Abstract**

A method of multiplexing binary data signals, in particular for a number of n binary data signals Dₖ, with k = 1 to n, having equal amplitudes A., comprises the steps.
- processing the data signals Dₖ such that the amplitudes A orig. of the data signals are changed by a multiple according A_{proc.} (Dₖ) = A_{orig}. (Dₖ) * 2^{(1-k)} ;
- adding the processed data signals to each other to generate a multiplexed total signal which is a 2ⁿ-level signal.

An advantage of the invention is that several asynchronous high bit rate data signals can be transmitted as a combined signal on one cable.

## Description

The invention concerns a method of multiplexing binary data signals, in particular for a number of n binary data signals Dₖ, with k = 1 to n, having equal amplitudes A orig.

For transporting several asynchronous high bit rate data signals it is known to use parallel interconnections on different electrical cables or optical fibres. Further, for the same purpose, time division multiplexing and frequency division multiplexing is usual.

A kind of amplitude multiplexing is known in a different technical field, namely in connection with an universal control box for electronics for children for doing experiments (time multiplexing, amplitude multiplexing, puls detection). Among others, the universal control box has several mechanically actuated switches followed by a resistor, wherein the resistors have different values and the switches with their individual resistors are connected in parallel. The output currents of the individual switches of the control box are added and the state of the individual switches is detected by the amount of the total current. Such apparatus cannot be used for combining high bit rate data signals of e.g. 10 Gbit/s.

The necessity of different (e.g. two) electric cables or optical cables (fibres) for transmission of different high bit rate data signals causes higher costs than if the data stream could be transported on one cable instead of a transportation on two cables.

It is an object of the invention to provide a method and device for combining several asynchronous high bit rate data signals (e.g. two signals with 10Gbit/s or with 10 Gbit/s and 2.5 Gbit/s) and transmitting the combined signal (or total data signal) on one cable e.g. electrical transmission line like coaxial cable or optical fibre like multimode optical fibre with VCSEL transmitter and the corresponding methods and devices for demultiplexing at a receiver. One application of such method and operators and system is the low cost interconnection in switching systems between asynchronous electrical switch matrices, as they are used e.g. in telecommunication exchanges.

According to a first aspect of the invention a method of multiplexing binary data signals comprises the processing the data signals Dₖ such that the amplitudes A orig. of the data signals are changed by a multiple according A_{proc}. (Dₖ) = A_{orig}. (Dₖ) * 2^{(1-k)}; adding the processed data signals to each other to generate a multiplexed total signal which is a 2ⁿ-level signal.

An advantage of the invention is that several asynchronous high bit rate data signals can be transmitted as a combined signal on one cable.

In an other aspect of the invention, a method of demultiplexing a total data signal comprising n data signals and multiplexed is characterised in that the first data signal is recovered by a comparison of the multiplexed total signal with a threshold level. The threshold level has an appropriate value, preferably about half the maximum amplitude of the 2ⁿ -level signal, and the next, i.e. second data signal is recovered by subtraction the recovered first data signal from the multiplexed total signal, generating the 2ⁿ⁻¹-level signal from which the second data signal is recovered by a comparison and the next, i.e. second data signal is recovered by subtraction the recovered first data signal from the multiplexed total signal with a threshold level, which is preferably half the maximum amplitude of the 2ⁿ⁻¹-level signal and so on until all n data signals are recovered.

An advantage is that a simple and reliable method for recovering the original signals is provided which may be brought to their original equal amplitude if required by appropriate amplifiers.

The invention proposes a kind of amplitude multiplexing for binary data. A multilevel signal is generated with a suitable combination of the asynchronous binary data input signals. For example, for two input signals (D1, D2) with equal amplitude, one input signal (D2) is halved and added to the other. The total multilevel signal (D1+1/2 D2) is transmitted on a single transmission line. In the receiver, the multilevel signal is demultiplexed into the aynchronous data signals by using a limiting amplifier. The threshold voltage of the amplifier is adjusted to an appropriate value, preferably about to the middle of the multilevel signal, thus recovering the signal D1. The signal D2 is recovered by subtracting the recovered signal D1 from the total multilevel signal. This principle may be used for more than two signals which are to be multiplexed and demultiplexed and for example for 3 such signals a further limiting amplifier for demultiplexing may be provided with threshold voltage adjusted to about the middle of that multilevel signal which remains after the subtraction of the signal D1, that is the multiplexed signal consisting of the signals D2 and D3.

The invention also concerns a device for multiplexing signals, in particular for a number of n binary data signals Dk, with k=1 to n, having equal amplitudes A_{orig.}, comprising
a first signal combiner to an input of which a first data signal D1 is to be delivered and a first attenuator to an input of which the second signal (D2) is to be delivered, and the output of which is connected to a further input to the first signal combiner, and for each further signal a further attenuator and a further signal combiner are provided, the latter being inserted into the output path of the immediately preceding attenuator, and a further input of which is connected to the output terminal of the further attenuator, to the input of which the next following further signal is to be provided, the attenuation factor of said further attenuator being twice the attenuation of the immediately preceding attenuator, and so on.

The invention also concerns a device for demultiplexing a total digital data signal comprising n data signals and produceable with a method according to claim 2 characterised in that it comprises means for separating a first original signal (D1) from further original signals, means for subtracting the recovered first data signal from the combined signal which produces the second original signal after attenuation in the case that only two original signal were present, and which device in other cases delivers a combined signal comprising the second original signal after attenuation and at least one further original signal after attenuation, in which latter case at least one further means for separating the signal from the remainder of the signals is provided.

An apparatus for demultiplexing a total data signal as discussed above has the advantage that by combining two signals each having two signal levels to a 4-level signal it is possible to increase the total transmission bit rate by the factor 2 e.g. by transmitting on a number of transmission lines a 4-level signal instead of the usual 2-level signals, or to reduce the space requirements and the cost of an installation to about the half. The transmission band width remains the same, thus the same (especially low cost and low loss components) can be used. E.g. VCSEL transmitters for 10 Gbit/s may be used; VCSEL = vertical cavity surface emitting laser; this is a special construction of a semi-conductor laser transmitting the light generally in a vertical direction from a surface of the transmitter; and/or as low loss components coaxial cables may be used, which have low attenuation at low frequencies.

Further features and advantages of the invention will be apparent from the following description of preferred variants and embodiments of the invention in connection with the drawings which show features essential for the invention, and in connection with the claims. The individual features may be realised individually or in any combination in an embodiment of the invention.
Fig. 1 shows a simple circuitry for multiplexing and demultiplexing in order to explain the principle of the invention; at the same time it shows a system for data transfer performing multiplexing and demultiplexing.
Fig. 2 shows an improvement on the transmitter side compared with Figure 1;
Fig. 3 shows an improvement on the receiver side in comparison with figure 1;
Fig. 4 shows a further modification on the receiver side;
Fig. 5 shows a transmitter side for multiplexing apparatus for three asynchronous data signals which are combined to an 8-level signal;
Fig. 6 shows the receiver side of an inventive system which receiver side is adapted to demultiplex an 8-level signal as produced by the apparatus of fig 5.

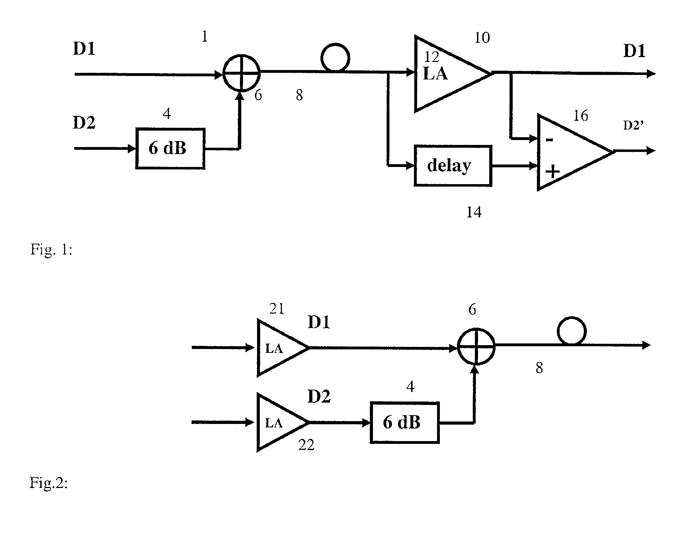

Fig. 1 serves for describing the basic principle of the invention, however, may be used as a simple embodiment of the invention. Two binary signals D1 and D2 having, in the example, the same amplitude measured as a voltage since the data signals are electrical signals are fed to a transmitting part (or transmitter) 1 of the circuitry of figure 1. We assume that the signals D1 and D2 have the same amplitude. The amplitude of the signal D2 is halved, in the example by using a 6dB (6 decibels) attenuator 4, and added to the signal D 1 in an appropriate device, in the example in a power combiner 6. Thus, an electrical signal which may assume four different voltage values, thus a 4-level electrical signal is generated. The bit rates of the signals D1 and D2 may be different in this multiplexing scheme or they may be equal. The signals D1 and D2 may be synchronised or not synchronised. The 4-level signal is transmitted over a transmission line 8 to a receiver 10 having a demultiplexing part.

If, in an example, the signals D1 and D2 originally have voltage values 0 volts and 0.6 volts for the logical levels 0 and 1 and the signal D2 was reduced by the attenuator 4 to 0 volts and 0.3 volts for the two binary values, the output signal of the combiner 6 is a 4-level signal having the voltage levels 0 volts, 0.3 volts, 0.6 volts, 0.9 volts. At times, when the two signals D1 and D2 are logical 0, the output of the combiner 6 has the level 0 volts. At times, when D1 and D2 each are logical 1, the signal output of the combiner 6 has a voltage of 0.9 volts.

The receiver 10 has a limiting amplifier (LA) 12 with an input of which the transmission line 8 is connected. The main feature of the limiting amplifier in this connection is that the limiting amplifier 12 delivers an output signal which has in this example, a lower value of 0 volts for an input signal below a threshold value of the limiting amplifier, and an output signal of a value of 0.6 volts for an input value above the threshold value. The threshold value may be about 0.4 volts. Thus, the output voltage of the higher level of the limiting amplifier 12 is not influenced by the momentary value of the second data signal D2. The same signal which is fed to the limiting amplifier 12 is also fed to an input of delay means 14, the delay time of which is equal the delay time of the limiting amplifier 12. The limiting amplifier 12 has a threshold voltage which is adjusted generally to the middle voltage of the signal fed the input of the limiting amplifier 12, and is preferably adjusted to a value lower than said middle voltage. Thus, the signal D1 being fed with its original amplitude to the limiting amplifier 12 is recovered at the output of the amplifier 12. In order to recover the signal D2, the output signal of the limiting amplifier 12 is subtracted from the delayed output signal of the delay means 14 in an operational amplifier 16. The output signal of the operational amplifier is designated as D2' to indicate that this latter mentioned signal has the same information content as the original signal D2, but has an other amplitude, namely half of the amplitude of the signal D1 at the output of the amplifier 12. Possible losses in the electronic elements and on the transmission line are not included in this discussion.

A limiting amplifier 12 is symbolised by a triangle which is usually used for operational amplifiers. Instead of a limiting amplifier, in embodiments of the invention a flipflop or a CDR are provided.

Figure 2 shows possible improvement on the transmitter side of figure 1. In case of input signals with different rise times (this may be the case if the input bit rates are very different e.g. 2.5 Gbit/s and 10Gbit/s) the limiting amplifiers 21 and 22, through which the data signals D1 and D2 are fed, generate output signals the rise times of which are not different. These just mentioned output signals are fed to the input sides of the attenuator 4 and the combiner 6 which are also shown in figure 1. Thus, the leading and trailing edges of the signals are maintained as sharp as possible.

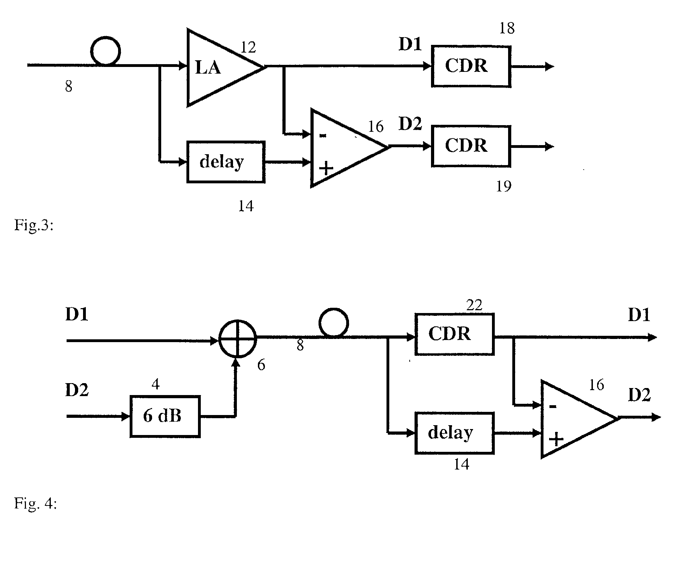

Figure 3 shows possible improvements on the receiver side compared with figure 1. The signals D1 and D2' leaving the arrangement shown in figure 1 at the right side thereof are each fed into an input of a clock and data recovery circuit (CDR) 18, 19 respectively, which provide a 3R-regeneration of the signals (3R-regeneration: regeneration, reshaping, reclocking).

In another embodiment of the invention which may be described by means of fig. 1, the data signals D1 and D2 coming from the left side in figure 1 are optical signals, the power combiner 6 is an optical combiner and the transmission line 8 is a fibre line. Also at the output side of the fibre line optical elements are present and the output signals are also optical signals. In a modification, the output side of the fibre line is connected to elements which transform the optical data signals to electrical data signals which are further processed by the electric elements already described with respect to figure 1. Since the attenuator reduces the power by 6 dB, i.e. to 25 % of the original power, the voltage present at the electrical elements on the just mentioned modification of the optical apparatus is reduced such that the electrical signal at the output of such apparatus of the signal D2 has half the amplitude of that of the signal D1.

This discussion of an optical apparatus may be extended to other electrical apparatuses and methods using electrical means described herein, such that all such other apparatuses and methods are by reference at the same time described as being apparatuses and methods using optical signals and at least partly optical components.

The electrical transmission line 8 mentioned above may be e.g. a coaxial cable. In case this transmission line is an optical link, this link may comprise a laser diode, an optical fibre and a photodiode for receiving the optical signal.

Figure 4 shows an example of a modification of the receiver side: the limiting amplifier 18 of figure 1 is replaced by a CDR 22 for the data signal D1 (CDR = clock and data recovery circuit). The CDR must have a limiting property as explained above, such that its output is dependent only on the data signal D1 as fed to the input terminal of the CDR, but not dependent on the signal D2.

The principle of combining (=multiplexing) of 2 data signals and the principle of separating the combined signals from one another (demultiplexing) as discussed above for 2 signals (n=2, number of levels of the combined signal = 2ⁿ = 4), can be extended to multiplexing, transmitting and demultiplexing of more than two data signals.

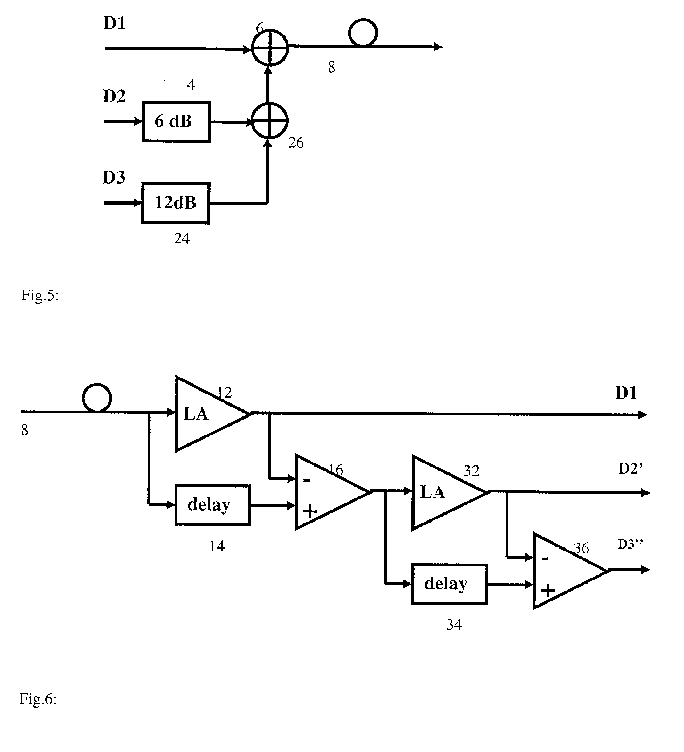

As an example, figure 5 shows a transmitter for multiplexing three asynchronous data signals D1, D2, D3, generating a 8-level signal. Compared with the arrangement of figure 1, a further attenuation element 24 performing an attenuation of 12 dB (i.e. twice the attenuation of the preceding attenuator 4) for the data signal D3 (D3 has the same amplitude as D1 and D2) is added and its output signal is added to the other signals by means of a further power combiner 26, to the inputs of which the output signals of the attenuators 4 and 24 are fed. The output of this further power combiner is connected to the input terminal of the first mentioned power combiner 6. Using in the example the voltage value of the signal D1 (0.6 volts) as discussed above, the output signal of the further attenuator 24 has a maximum voltage of 0.15 volts.

Figure 6 shows a receiver and demultiplexer for the combined signal produced in the arrangement of figure 5. Compared with figure 1, the output signal of the amplifier 16 is the combination of the signal D2 and D3. Therefore, this signal cannot be used immediately but has to be split into the individual signals D2' on the one hand and D3" on the other hand by means of a further limiting amplifier 32 and its associated delay means 34 and a further amplifier (for subtracting) 36 which perform the same function as the arrangement in figure 1 at the right side of the transmission line, however not for the signals D1 and D2' but for the signals D2' and D3". The amplitude of D3" is 1/8 of the amplitude of D3.

In the examples of Fig. 5 and 6, n is equal to 3, the combined signal has 2ⁿ= 8 levels. For more than 3 signals to be multiplexed, the number of levels increases and the attenuation of the further signal(s) increases as set out further above.

It is clear to the expert that the above discussions relating to replacement of a limiting amplifier with a CDR or a flipflop or other appropriate limiting device are also applicable for the arrangement of figure 6 and for further possible arrangements using more than 3 signals to be multiplexed and de-multiplexed.

The described receiver parts and demultiplexing parts and methods handle multiplex signals which were produced by the methods and devices described in the example. However, the receiver parts and demultiplexing parts and methods are also able, according to the invention, to demultiplex such signals, which were produced by any other device or any other method provided that the appearance of the signals is generally similar to the appearance of the signals and of the multiplexed signal produced by the above described inventive multiplexing devices and methods.

In the examples specified by the expressly given voltage values, there occur positive voltages for the signal values representing the logical level 1 and the voltage 0 volts for the logical value 0 for all signals, the voltage 0 volts being of course not of the opposite polarity. Thus, the amplitude, namely the difference between maximum voltage and minimum voltage for each signal is equal to the highest voltage of each signal. The invention however, is by no means restricted to such a choice of voltages. To the indicated voltage levels any direct voltage value may be added, resulting e.g. in an example, in which the voltages for all logical levels of all signals have positive values, or in an other example, where all such voltages have negative values or e.g. in such examples, where negative and positive voltages occur. The amplitudes of the different signals are not affected by such addition of a direct current voltage value. Therefore, also the principles of the function of the invention (methods and devices) are not affected by such addition of a direct current voltage value.

The signal lines may be in examples of the invention realised as differential lines. This is especially advantageous when the invention is realised in the form of integrated circuits.

## Claims

1. Method of multiplexing binary data signals, in particular for a number of n binary data signals Dₖ, with k = 1 to n, having equal amplitudes A orig., comprising the steps:
processing the data signals Dₖ such that the amplitudes A orig. of the data signals are changed by a multiple according A_{proc.} (Dₖ) = A_{orig}. (Dₖ) * 2^{(1-k)};
adding the processed data signals to each other to generate a multiplexed total signal which is a 2ⁿ-level signal.

2. Method of demultiplexing a total data signal comprising n data signals and multiplexed with a method according to claim 1, **characterised in that**
the first data signal is recovered by a comparison of the multiplexed total signal with a threshold level, which is half the maximum amplitude of the 2ⁿ-level signal, and the next, i.e. second data signal is recovered by subtraction the recovered first data signal from the multiplexed total signal, generating the 2ⁿ⁻¹-level signal from which the second data signal is recovered by a comparison and the next, i.e. second data signal is recovered by subtraction the recovered first data signal from the multiplexed total signal with a threshold level, which is half the maximum amplitude of the 2ⁿ⁻¹-level signal and so on until all n data signals are recovered.

3. Device for multiplexing binary data signals, in particular for a number of n binary data signals Dk, with k=1 to n, having equal amplitudes A_{orig.}, comprising
a first signal combiner to an input of which a first data signal D 1 is to be delivered and a first attenuator to a input of which the second signal (D2) is to be delivered, and the output of which is connected to a further input to the first signal combiner, and for each further signal a further attenuator and a further signal combiner are provided, the latter being inserted into the output path of the immediately preceding attenuator, and a further input of which is connected to the output terminal of the further attenuator, to the input of which the next following further signal is to be provided, the attenuation factor of said further attenuator being twice the attenuation of the immediately preceding attenuator, and so on.

4. Device for demultiplexing a total digital data signal comprising n data signals and produceable with a method according to claim 2 **characterised in that** it comprises
means for separating the original signal (D1) from further original signals, means for subtracting the recovered first data signal from the combined signal which produces the second original signal after attenuation in the case that only two original signal were present, and which device in other cases delivers a combined signal comprising the second original signal after attenuation and at least one further original signal after attenuation, in which latter case at least one further means for separating the signal from the remainder of the signals is provided, optionally a direct current voltage being added to the mentioned voltage values.

5. Method according to claim 1, **characterised in that** the original data signals have one logical level on the same voltage with the same polarity for each signal, and the other logical level on an other voltage equal for all signals however not of the opposite polarity, optionally a direct current voltage value being added to the mentioned voltage values.

6. Device according to claim 3, **characterised in that** the original data signals have one logical level on the same voltage with the same polarity for each signal, and the other logical level on an other voltage equal for all signals, however not of the opposite polarity, optionally a direct current voltage value being added to the mentioned voltage values.

7. Device according to claim 4 **characterised in that** the means for separating comprises a threshold member.

8. Device according to claim 7, **characterised in that** the threshold member is selected from the group consisting of limiting amplifier, flipflop, CDR (clock and data recovery circuit) device.

9. Device according to claim 4 **characterised in that** means for subtracting the data signal recovered from the remainder of the signal comprises a subtraction unit and a delay means.

10. System comprising multiplexing and demultiplexing methods and devices according to any preceding claim.
